# EUROPÄISCHE PATENTANMELDUNG

(11) **EP 1 990 548 A2**
(43) Veröffentlichungstag der Anmeldung: **12.11.2008**
(21) Anmeldenummer: 08003704.7
(22) Anmeldetag: 28.02.2008
(51) Int. Cl.: F16B 5/06

(54) **Halteeinrichtung für eine Plane**

(30) Priorität: 09.05.2007 DE 102007021754
(71) Anmelder: YKK Europe Limited, London EC2A 4DN (GB)
(72) Erfinder: Dlugosch, Jochen, 63533 Mainhausen (DE)
(74) Vertreter: Busch, Thomas

(57) **Zusammenfassung**

Halteeinrichtung (1) zum Halten eines flächigen Gegenstands, insbesondere einer Plane, mit einem ersten (2) und einem zweiten (3) Haltebereich, die in einer Sicherungsstellung zur Sicherung des flächigen Gegenstands einen Spalt (6) einer ersten Breitenabmessung (7) begrenzen, wobei die Haltebereiche (2,3) in eine Freigabestellung zur Montage/Demontage des flächigen Gegenstands verstellt werden können, in der der Spalt (6) eine zweite Breitenabmessung hat, die größer als die erste Breitenabmessung (7) ist.

## Beschreibung

Die Erfindung betrifft eine Halteeinrichtung zum Halten eines flächigen Gegenstands, insbesondere einer Plane, mit einem ersten und einem zweiten Haltebereich, die in einer Sicherungsstellung zur Sicherung des flächigen Gegenstands einen Spalt einer ersten Breitenabmessung begrenzen, wobei die Halteeinrichtung insbesondere zum Halten einer Plane mit verdicktem Randbereich an einer Struktur, insbesondere einem Wohnwagen oder ähnlichem, ausgelegt ist.

Derartige Halteeinrichtungen sind bekannt. Sie sind ein Beispiel für ein schraubenloses Haltesystem (SHS), mit dem ein flächiger Gegenstand, im folgenden einfach eine Plane, nicht direkt z.B. mit einem Wohnwagen verschraubt wird, sondern im wesentlichen formschlüssig an dem Wohnwagen gesichert werden kann. Der Plane ist beispielsweise eine Zeltplane eines typischen Wohnwagenzelts, das üblicherweise noch ein Zeltgestänge aufweist. Zur Montage/Demontage der Plane wird dazu ein üblicherweise verdickter Randbereich der Plane herkömmlich längs einer Art Aufnahmerinne in diese eingeschoben bzw. wieder aus ihr herausgezogen.

So ist etwa in US 2,787,321 in Fig.1, hier als Figur 7 beigelegt, eine Halteeinrichtung für eine Plane 25 gezeigt, an deren Randbereich eine Schlaufe 26 gebildet ist, in die eine Stange 27 eingeführt ist, so daß der Randbereich der Plane 25 verdickt ist. Die Plane 25 ist an einer Trägerplatte 10 über eine sich längs erstreckende Hülse 11 gesichert, die den verdickten Randbereich der Plane 25 im wesentlichen formschlüssig umgreift. Dabei tritt die Plane 25 aus der Hülse 11 durch einen Spalt 13 aus.

Diese gezeigte Halteeinrichtung weist jedoch Nachteile auf. Zum einen ist der Montage/Demontagevorgang für die Plane aufwendig, da die Stange 27 aus der Schlaufe 26 längs der Hülse (Aufnahmerinne) herausgeschoben werden muß, woraufhin die Plane 25 durch den Spalt 13 entfernbar ist. Insbesondere bei der Montage ist es jedoch schwierig, die Stange 27 wieder in die Schlaufe 26 einzufädeln. Alternativ kann die gesamte Plane 25 samt Stange 27 durch die kreisförmige Öffnung 12 seitlich aus der Hülse 11 herausgezogen werden. Auch hier kann das Wiedereinfädein bei der Montage jedoch arbeits- und zeitaufwendig sein. Ein weiterer Nachteil besteht darin, daß zum Herausschieben bzw. Wiedereinfädeln des verdickten Randbereichs der Plane 25 ein gewisser Raumbedarf seitlich der Hülse 11 besteht.

EP 0 148 287 A1 und EP 0 187 113 A2 zeigen jeweils eine Halteverrichtung für eine Schnur oder ein längliches Element gegen deren Längsbewegung. Dazu wird die Schnur durch einen Befestigungshebel, dessen eines Ende als Nockenwelle ausgebildet ist, durch Verschwenken des Hebels im Bereich der Nockenwelle gegen eine Bodenplatte gepreßt. Dabei verläuft die Schwenkachse senkrecht zur Richtung, in der die Schnur an der Bodenplatte anliegt.

Zum Sichern einer Plane ist diese Vorrichtung nicht geeignet, da es bereits an einer Durchtrittsöffnung für die Plane fehlt.

In JP 5-16438 Y2 ist eine Halteeinrichtung für ein Seil/eine Schnur offenbart, die in einer Aufnahmerinne einliegt. Dabei bilden plastisch verformbare Bereiche der Halteeinrichtung eine Schnappsicherung, die im eingeschnappten Zustand ein Entfernen des Seils aus der Rinne verhindern.

Auch diese Haltevorrichtung ist für Planen nicht geeignet, da es an einer Durchtrittsöffnung für die Plane fehlt. Wollte man dagegen die Plane von der Schnappeinrichtung mit einzwängen lassen, ginge die Sicherungswirkung der Schnappeinrichtung verloren, da sich die Schnappeinrichtung bei Zug an der Plane automatisch öffnen würde.

Angesichts dieser Probleme liegt der Erfindung die Aufgabe zugrunde, eine nach dem SHS-Prinzip arbeitende Halteeinrichtung bereitzustellen, bei der die Montage/Demontage des flächigen Gegenstands (der Plane) in einfacherer Weise durchgeführt werden kann.

Die Erfindung löst diese Aufgabe durch eine Weiterbildung einer Halteeinrichtung der eingangs genannten Art, die dadurch gekennzeichnet ist, daß die Haltebereiche in eine Freigabestellung zur Montage/Demontage des flächigen Gegenstands verstellt werden können, in der der Spalt eine zweite Breitenabmessung hat, die größer als die erste Breitenabmessung ist.

Durch diese erfindungsgemäße Veränderbarkeit der Spaltabmessung wird erreicht, daß etwa ein verdickter Randbereich einer Plane bei vergrößerter Spaltöffnung (Freigabestellung) quer zu beispielsweise der länglichen Hülse der US 2,878,321 in diese eingebracht werden kann. Dadurch wird ein aufwendiges Einfädeln längs der Hülse vermieden. Auch ist es nicht mehr nötig, daß der herkömmlich benötigte Raum seitlich der Hülse freigehalten werden muß.

Im Rahmen der Erfindung ist nämlich erkannt worden, daß es für eine formschlüssige Sicherung etwa der Plane ausreicht, wenn die Spaltöffnung lediglich in einer Sicherungsstellung so klein ist, daß die Plane gehalten wird, z.B. indem ein verdickter Randbereich der Plane zurückgehalten wird. Durch Verstellen auf die zweite Spaltgrößenabmessung kann die Montage/Demontage problemlos erfolgen. So kann der Vorteil des SHS-Systems beibehalten werden und gleichzeitig eine vereinfachte Montage/Demontage der Plane erreicht werden.

Nach einer bevorzugten Ausführungsform ist die Halteeinrichtung weiter zum Halten eines flächigen Gegenstands mit verdicktem Randbereich, insbesondere einer Plane, an einer Struktur, insbesondere einem Wohnwagen oder ähnlichem, ausgelegt, wobei der erste Haltebereich ein Basisbereich ist, an dem eine entlang einer Aufnahmerichtung verlaufende Aufnahmerinne vorgesehen ist, die der Aufnahme des verdickten Randbereichs dient, der zweite Haltebereich ein die Aufnahmerinne in einer Umfangsrichtung zum Teil umschließender Sicherungsbereich ist, der einer im wesentlichen formschlüssigen Sicherung des verdickten Randbereichs in der Aufnahmerinne dient, der Spalt als eine quer zur Aufnahmerichtung liegende Durchgangsöffnung zum Durchtritt eines nicht verdickten Abschnitts des flächigen Gegenstands von der Aufnahmerinne nach außen ausgebildet ist, und das Verstellen derart ist, daß der Sicherungsbereich relativ zu dem Basisbereich bewegt wird, wobei die Abmessung der Durchgangsöffnung im wesentlichen eine Abmessung in Umfangsrichtung ist.

Selbstverständlich ist die erste Abmessung der Durchgangsöffnung in der Sicherungsstellung dazu kleiner als die Querabmessung der Aufnahmerinne, genauer gesagt im wesentlichen so ausgelegt, daß sie den Durchtritt einer typischen Planendicke erlaubt, aber kleiner ist als ein typischer verdickter Randbereich der Plane.

Nach einer bevorzugten Ausführungsform ist die Relativbewegung des Sicherungsbereichs eine Schwenkbewegung. So kann die Veränderung der Größe der Durchgangsöffnung auf besonders bedienungsfreundliche Weise durch ein einfaches Verschwenken erfolgen.

Nach einer zweckmäßigen Ausführungsform verläuft die Aufnahmerinne gerade, und die Schwenkachse liegt parallel zur Aufnahmerichtung. So kann ein Verschwenken auch bei längeren Aufnahmerinnen einfach durchgeführt werden.

Nach einer bevorzugten Ausführungsform ist der Basisbereich von einer plattenartigen Basis gebildet, deren Hauptebene insbesondere parallel zur Aufnahmerichtung liegt, und der Sicherungsbereich ist durch ein separates Betätigungsteil gebildet. So kann die Herstellung der Halteeinrichtung vereinfacht werden. Insbesondere kann durch die Trennung der Halteeinrichtung in Basis und Betätigungsteil ein modularer Aufbau der Halteeinrichtung erreicht werden, so daß gegebenenfalls unterschiedlich ausgebildete Betätigungsteile unterschiedliche Dimensionierungen der Halteeinrichtungen erlauben.

In diesem Zusammenhang ist bevorzugt eine Arretiereinrichtung zum Halten des Betätigungsteils an der Basis vorgesehen.

Nach einer weiter bevorzugten Ausführungsform weist die Basis beabstandet von der Aufnahmerinne einen quer aus der Hauptebene ragenden Vorsprungsbereich auf, und die Schwenkachse ist im Bereich des Vorsprungsbereichs angeordnet. Dies ermöglicht eine passende Dimensionierung des Schwenkarms bei ausreichender Übertragung der Schwenkbewegung um die Schwenkachse in eine Öffnungsvergrößerung in Umfangsrichtung.

In einer zweckmäßigen Ausführungsform ist vorgesehen, daß der Vorsprungsbereich durch ein separates Teil gebildet ist. Dies ist insbesondere im Hinblick auf den modularen Aufbau der Halteeinrichtung vorteilhaft.

In einer besonders bevorzugten Ausführungsform ist das Betätigungsteil ein am Vorsprungsbereich gelagerter wippenartiger Hebel. So wird eine für den Bediener einfache Betätigung des Betätigungsteils erreicht, indem dieser nur noch eine Druckkraft aufbringen muß.

Nach einer weiter bevorzugten Ausführungsform durchdringt der Vorsprungsbereich das Betätigungsteil, und die Schwenkachse ist auf der der Basis abgewandten Seite des Betätigungsteils angeordnet. So wird eine vorteilhafte Hebelwirkung für den Bediener erreicht.

Nach einer besonders zweckmäßigen Ausführungsform definiert ein in den Vorsprungsbereich gesteckter Stift die Schwenkachse. So kann das Betätigungsteil einfach um den Stift herum verschwenkt werden.

Nach einer besonders bevorzugten Ausführungsform bildet der Stift (auch) die Arretiereinrichtung. So vereinigt der Stift vorteilhaft zwei Funktionen in sich, so daß keine weiteren Bauteile mehr benötigt werden.

In einer weiter bevorzugten Ausführungsform ist ein bezüglich einer quer zur Aufnahmerichtung verlaufenden Achse mittlerer Bereich des Betätigungsteils im wesentlichen formschlüssig zwischen den Stift und einen dem Stift gegenüberliegenden Abschnitt der Basis eingepaßt. So wird die Halteeinrichtung besonders kompakt, und ein Spiel der Bauteile untereinander in der Sicherungsstellung wird vermieden.

In diesem Zusammenhang ist es insbesondere vorteilhaft, wenn das Betätigungsteil und/oder der Stift eine höhere Festigkeit und/oder Biegesteifigkeit als die Basis aufweisen/aufweist. So geht keine Kraft des Benutzers für unnötige Materialverformungen beim Verschwenken verloren.

Nach einer Ausführungsvariante weist der Basisbereich/die Basis Befestigungslöcher für eine Befestigung der Halteeinrichtung an der Struktur auf. In der Regel kann die Basis bereits durch das Gewicht bzw. den Druck der Plane und des Zeltgestänges an dem Wohnwagen gehalten werden, jedoch wird durch die Befestigungslöcher eine weitere Option für eine verstärkte Schraubenbefestigung gegeben.

Nach einer zweckmäßigen Ausführungsform weist der Vorsprungsbereich an seinem entfernten Ende ein Loch auf, das zum Ankoppeln eines Zeltgestänges dienen kann.

Nach einer weiter zweckmäßigen Ausführungsform weist das Betätigungsteil in Draufsicht auf die Hauptebene der Basis eine im wesentlichen stempelförmige Grundform auf, wobei im mittleren Bereich Einbuchtungen vorgesehen sind, die insbesondere die Befestigungslöcher der Basis freilegen. Durch die stempelartige Grundform erhält der Bediener einen gut erkennbaren und ausreichend großen Betätigungsbereich zum Betätigen des Betätigungsteils. Zum anderen kann sichergestellt werden, daß gegebenenfalls durch die Befestigungslöcher geschraubte Schrauben ohne Entfernen des Betätigungsteils zugänglich sind.

Nach einer weiter bevorzugten Ausführungsform kann eine Spanneinrichtung zum elastischen Spannen der Haltebereiche, insbesondere des Sicherungsbereichs/Betätigungsteils in die Sicherungsstellung, insbesondere in Form einer Sprungfeder, vorgesehen sein. So muß der Bediener zwar eine etwas höhere Kraft aufwenden, um das Betätigungsteil in die Freigabestellung zu bewegen. Andererseits wird er dafür hinsichtlich der Bewegung in die Sicherungsstellung unterstützt, wodurch auch einem zufälligen Öffnen der Durchgangsöffnung durch z.B. eine unbeabsichtigte Kraftausübung auf das Betätigungsteil entgegengewirkt wird.

In einer zweckmäßigen Ausführungsform weist die Aufnahmerinne einen kreisförmigen Querschnitt auf. Dies erleichtert die formschlüssige Halterung des verdickten Randbereichs etwa der Plane.

Für den Durchtritt des flächigen Gegenstands durch die Durchtrittsöffnung in der Sicherungsstellung ist es ausreichend, wenn zwischen sicherungsseitigen Endflächen der Basis und des Betätigungsteils ein anliegender, ungebundener Kontakt gebildet ist.

Alternativ kann aber auch vorgesehen sein, daß bereits ein Spalt zwischen diesen Flächen gebildet ist. So wirken bei montiertem Zustand des flächigen Gegenstands keine Spannungen auf das Betätigungsteil bzw. das Schwenksystem.

Nach einer besonders bevorzugten Ausführungsform verläuft die Durchtrittsöffnung radial in einer Richtung, die mit der Hauptebene der Basis einen Winkel im Bereich von 10° bis 80°, bevorzugt 30° bis 60°, insbesondere 40° bis 50° einschließt. So verteilen sich bei Zug auf den flächigen Gegenstand auftretende Zugkräfte geeignet auf die Halteeinrichtung. Auch wird eine zufriedenstellend rasche Übertragung der Schwenkbewegung um die Schwenkachse in eine Öffnungsvergrößerung in Umfangsrichtung erreicht.

Nach einer zweckmäßigen Ausführungsform weist der Basisbereich/die Basis an der dem Sicherungsbereich abgewandten Seite einen Flanschbereich auf. Mit dem Flanschbereich kann die Halteeinrichtung selbst in etwa ein Elastomerschutzkissen eingepaßt sein, welches eine Beschädigung der Wohnwagenoberfläche (des Lacks) verhindert.

Nach einer zweckmäßigen Ausführungsform sind in der Aufnahmerinne Zähne angeordnet. Diese greifen in den verdickten Endbereich z.B. der Plane ein und sichern die Plane gegen seitliches Verrutschen in Aufnahmerichtung.

Nach einem weiteren Gesichtspunkt der Erfindung wird ein aus einer oder einer Mehrzahl der oben beschriebenen Halteeinrichtungen bestehendes Haltesystem vorgesehen. So kann es ausreichend sein, wenn der flächige Gegenstand nur an bestimmten Halteabschnitten gehalten wird, wobei die Halteeinrichtungen dann an diesen Halteabschnitten anzuordnen sind.

Bezüglich des Verfahrens ist ein Verfahren zum Sichern eines flächigen Gegenstands, insbesondere einer Plane, an dem Wohnwagen oder einer ähnlichen Struktur, bei dem der flächige Gegenstand mit einem verdickten Endbereich in eine durch ein Haltesystem des Wohnwagens oder der ähnlichen Struktur definierte Sicherungsbahn im wesentlichen formschlüssig eingebracht wird, wobei der eingebrachte flächige Gegenstand aus einer quer zur Sicherungsbahn verlaufenden Durchtrittsöffnung der Sicherungsbahn nach außen austritt, gegenüber einem herkömmlichen Sicherungsverfahren, im wesentlichen dadurch gekennzeichnet, daß das Einbringen des flächigen Gegenstands durch die Durchtrittsöffnung quer zur Sicherungsbahn erfolgt, wobei die Durchtrittsöffnung zum Einbringen aufgeweitet und anschließend wieder verengt wird.

Dabei ist insbesondere vorgesehen, daß das Aufweiten und Verengen der Durchtrittsöffnung durch ein Verschwenken eines die Sicherungsbahn zumindest teilweise definierenden Sicherungsbereichs einer Halteeinrichtung des Haltesystems erfolgt.

Die Vorteile des erfindungsgemäßen Sicherungsverfahrens ergeben sich aus den oben erläuterten Vorteilen der erfindungsgemäßen Halteeinrichtung.

Nach einem weiteren Gesichtspunkt der Erfindung wird die Verwendung eines Haltevorrichtung, aufweisend ein erstes und ein zweites Halteteil, die in einer Sicherungsstellung einen Spalt einer ersten Breitenabmessung begrenzen, und in eine Freigabestellung verstellt werden können, in der der Spalt eine zweite Breitenabmessung hat, die größer als die erste Breitenabmessung ist, zum Sichern eines flächigen Gegenstands, insbesondere einer Plane, an einem Wohnwagen oder einer ähnlichen Struktur, beansprucht.

Weitere Vorteile und Einzelheiten der Erfindung ergeben sich aus der nachfolgenden Beschreibung mit Bezug auf die beiliegenden Figuren, von denen
- Fig. 1: eine Halteeinrichtung nach einer ersten Ausführungsform der Erfindung in einer perspektivischen Ansicht zeigt,
- Fig. 2a: eine Draufsicht auf die Basis der Halteeinrichtung aus Fig. 1 zeigt,
- Fig. 2b: eine Seitenansicht der Basis der Halteeinrichtung aus Fig. 1 zeigt,
- Fig. 2c: eine Schnittansicht entlang der Linie A-A aus Fig. 2a der Halteeinrichtung aus Fig. 1 zeigt,
- Fig. 2d: eine perspektivische Ansicht der Basis der Halteeinrichtung aus Fig. 1 zeigt,
- Fig. 3a: eine Draufsicht von unten des Betätigungsteils der Halteeinrichtung aus Fig. 1 zeigt,
- Fig. 3b: eine Seitenansicht der Halteeinrichtung aus Fig. 1 zeigt,
- Fig. 3c: eine entlang der Linie A-A aus Fig. 3a genommene Schnittansicht des Betätigungsteils der Halteeinrichtung aus Fig. 1 zeigt,
- Fig. 3d: eine perspektivische Ansicht des Betätigungsteils der Halteeinrichtung aus Fig. 1 zeigt,
- Fig. 4a: eine perspektivische Ansicht eines Vorsprungsbereichs (-teils) der Basis der Halteeinrichtung aus Fig. 1 zeigt,
- Fig. 4b: eine Seitenansicht des Vorsprungsteils aus Fig. 4a zeigt,
- Fig. 4c: eine Stirnansicht des Vorsprungsteils aus Fig. 4a zeigt,
- Fig. 5a: eine perspektivische Ansicht einer Halteeinrichtung einer zweiten Ausführungsform der Erfindung zeigt,
- Fig. 5b: eine Draufsicht auf die Halteeinrichtung aus Fig. 5a zeigt,
- Fig. 5c: eine Seitenansicht der Halteeinrichtung aus Fig. 5a zeigt,
- Fig. 6a: eine Halteeinrichtung nach einer dritten Ausführungsform der Erfindung in einer perspektivischen Ansicht zeigt,
- Fig. 6b: eine Draufsicht auf die Halteeinrichtung aus Fig. 6a zeigt,
- Fig. 6c: eine Seitenansicht der Halteeinrichtung aus Fig. 6a zeigt,
- Fig. 6d: eine entlang der Linie B-B von Fig. 6b genommene Schnittansicht zeigt,
- Fig. 6e: eine vergrößerte Darstellung des in Fig. 6c mit A bezeichneten Bereichs zeigt, und
- Fig. 7: ein herkömmliches Haltesystem für eine Plane mit verdicktem Randbereich an einer Struktur zeigt.

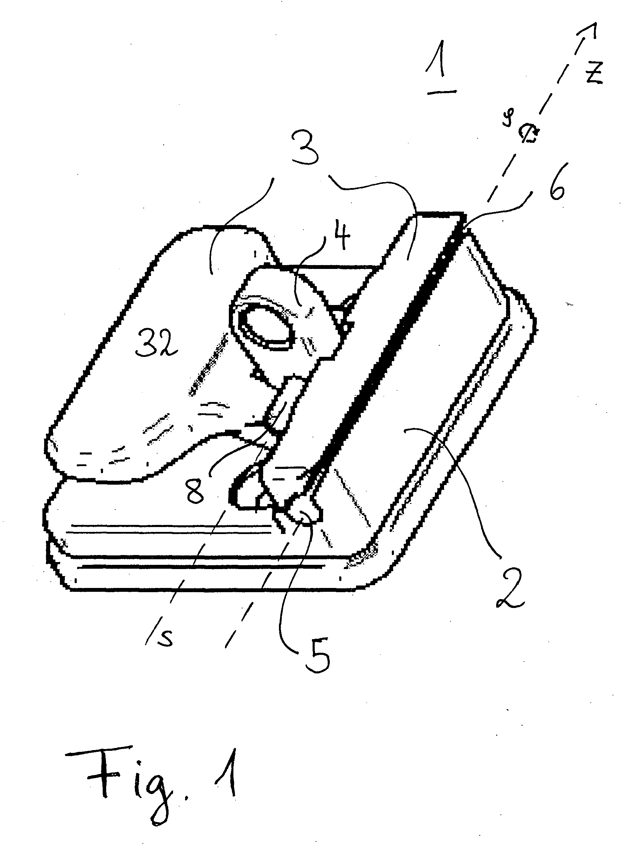

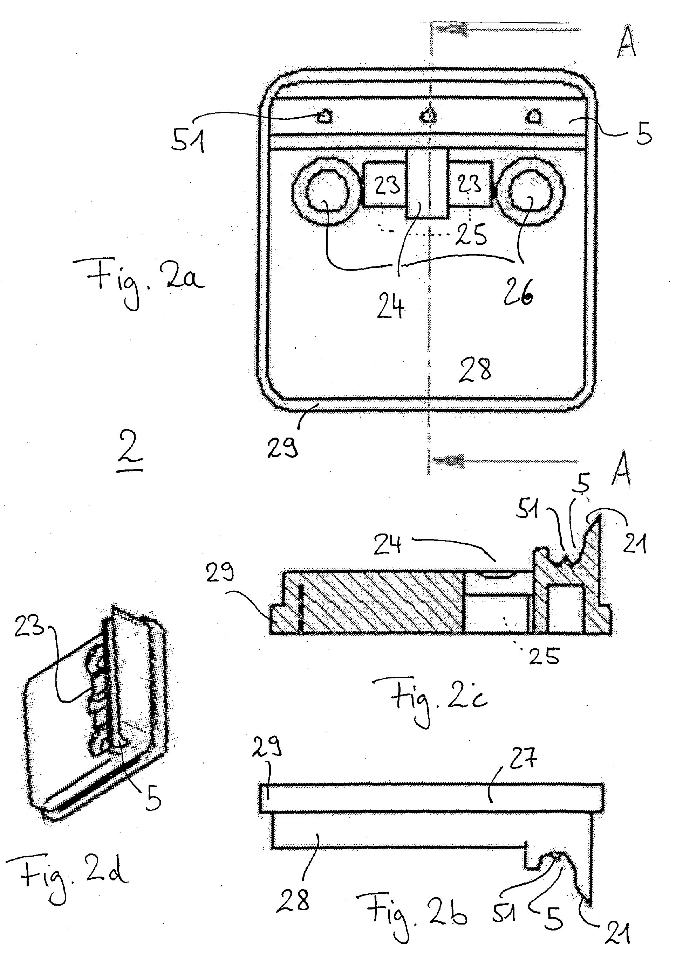

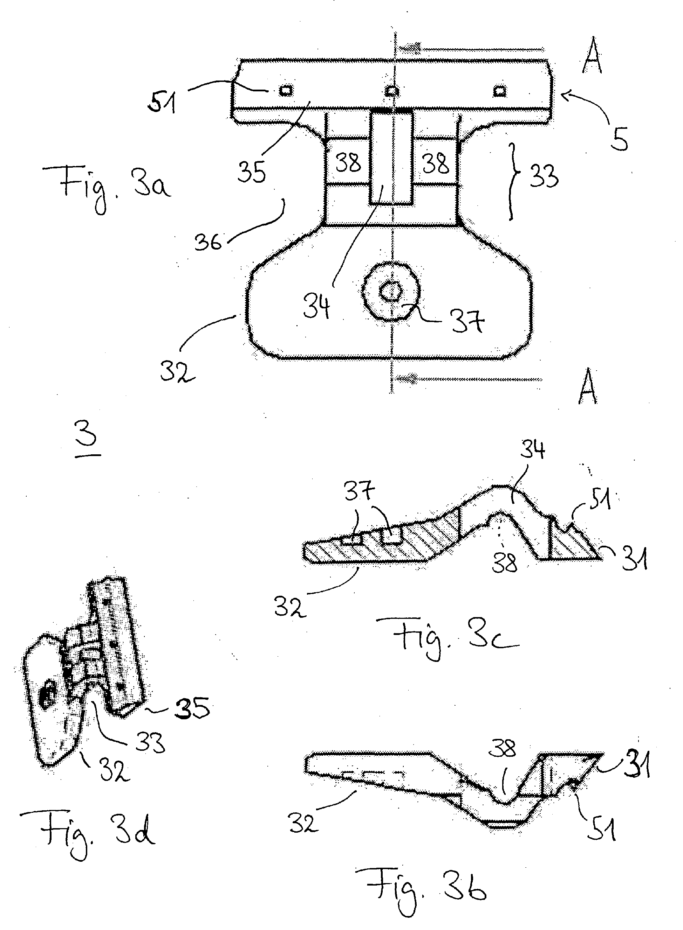

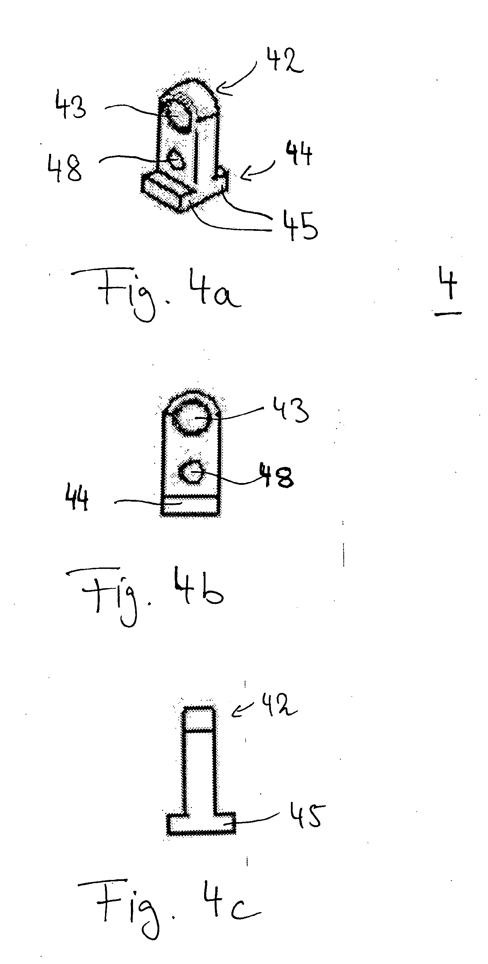

Fig. 1 zeigt eine erste Ausführungsform der Halteeinrichtung der Erfindung. Dabei besteht die Halteeinrichtung 1 aus vier Bauteilen, einer Basis 2, einem Betätigungsteil 3, einem Vorsprungsteil 4 und einem (Schwenk-, Arretier-)Stift 8. Die Basis 2 ist einzeln in den Figuren 2a bis 2d abgebildet, das Betätigungsteil 3 in den Figuren 3a bis 3d, sowie das Vorsprungsteil 4 in den Figuren 4a bis 4c.

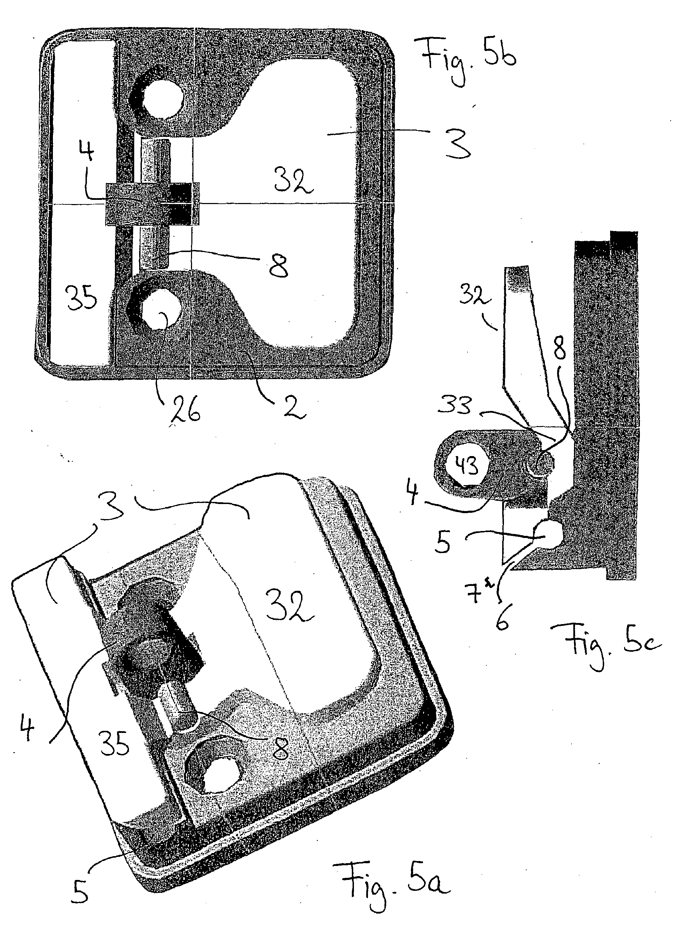

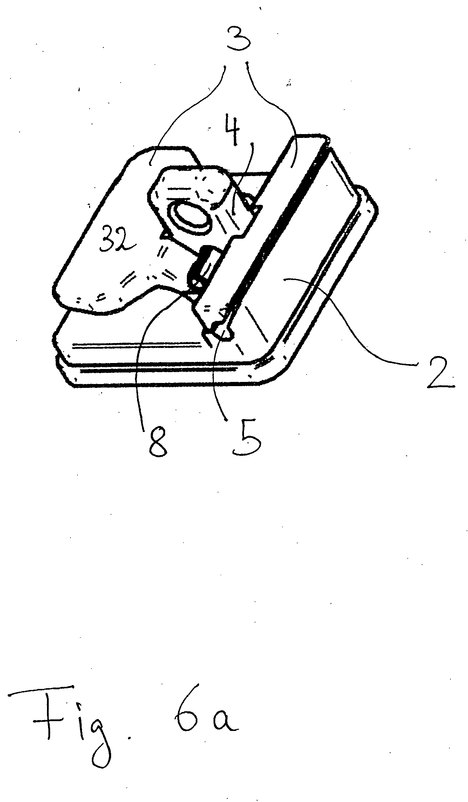

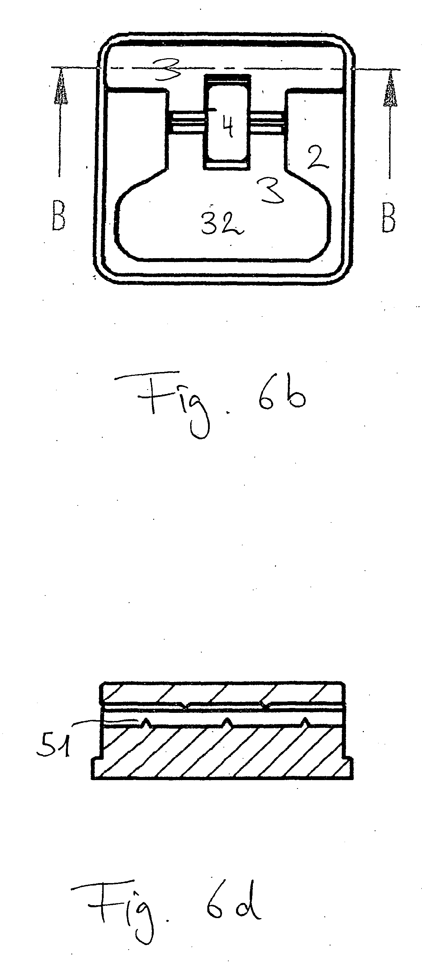

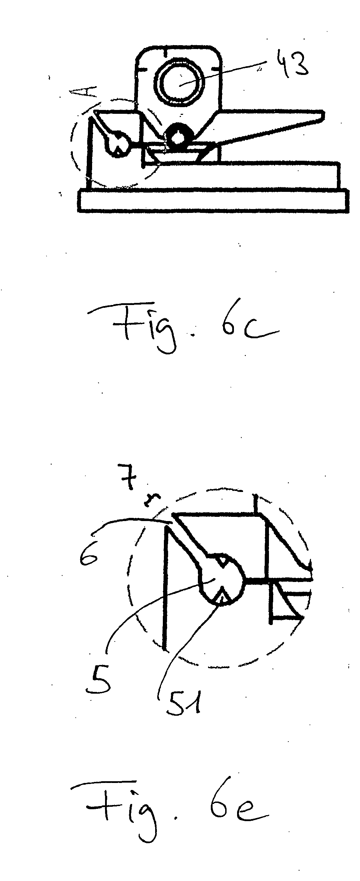

Aus Fig. 1 ist zu erkennen, daß zwischen der Basis 2 und dem Betätigungsteil 3 eine Rinne 5 mit kreisförmigem Querschnitt entlang einer Richtung gebildet ist, die in Fig. 1 als z-Richtung angezeigt ist. Die Rinne 5 ist dazu ausgelegt, einen verdickten Randbereich einer Plane, wie etwa den aus Schlaufe 26 und Stange 27 bestehenden Randbereich der Plane 25 aus Fig. 6 aufzunehmen. Damit die Plane über den verdickten Randbereich in der Rinne 5 gesichert ist, umgreifen die Basis 2 und das Betätigungsteil 3 die Rinne 5 in Umfangsrichtung ϕ zumindest teilweise, nämlich derart, daß ein Spalt 6 gebildet ist, der als Durchgangsöffnung für den nicht verdickten Planenabschnitt (25 in Fig. 6) dient. Die Spaltbreite des Spalts 6, die im wesentlichen in Umfangsrichtung ϕ verläuft, ist besser in den Figuren 5c und 6e zu sehen und darin mit 7 bezeichnet (Sicherungsstellung).

Wie bei der in Fig. 6 gezeigten herkömmlichen Halterung könnte der verdickte Randbereich der Plane längs der z-Richtung in die Rinne 5 der Halteeinrichtung 1 eingefädelt werden, wobei die Plane durch den Spalt 6 aus der Rinne 5 austritt.

Bei der Halteeinrichtung 1 der Erfindung kann ein verdickter Randbereich einer Plane allerdings auch in einer radialen Richtung quer zur z-Richtung in die Rinne 5 eingebracht werden, nämlich durch den Spalt 6. Dazu wird der Spalt 6 über eine Betätigung des Betätigungsteils 3 von der in Fig. 1 gezeigten Sicherungsstellung in eine nicht gezeigte Freigabestellung vergrößert. Dies wird durch eine schwenkbare Lagerung des Betätigungsteils 3 an der Basis 2 erreicht.

Wie noch besser aus Fig. 5c zu erkennen ist, ist das Betätigungsteil 3 in Form eines verschwenkbar gelagerten Hebels gebildet, genauer gesagt in Form eines wippenartigen zweiarmigen Hebels. Der in Fig. 1 linke Hebelarm stellt einen tastenartigen Betätigungsbereich 32 des Betätigungsteils 3 dar und der in Fig. 1 rechts liegende Hebelarm einen Bereich 35, der die Rinne 5 in Umfangsrichtung ϕ zum Teil umgreift. Der zwischen dem Betätigungsbereich 32 und dem Sicherungsbereich 35 liegende mittlere Bereich 33 weist in z-Richtung mittig eine Durchgangsöffnung 34 auf, die in Fig. 3a besser zu erkennen ist. Durch die Durchgangsöffnung 34 erstreckt sich das Vorsprungsteil 4, das einen Vorsprungsbereich der Basis 2 bildet und seinerseits von der in Fig. 1 nicht sichtbaren Rückseite der Basis 2 diese durch die Öffnung 24 (siehe Fig. 2a) durchdringt.

Durch eine Öffnung 48 in dem Vorsprungsteil 4 ist ein Stiftbolzen 8 reibschlüssig durchgesteckt, der die Schwenkachse s für das Verschwenken des Betätigungsteils 3 gegenüber der Basis 2 definiert. Der Stiftbolzen 8 ragt beidseitig aus dem Vorsprungsteil 4 heraus, vorzugsweise symmetrisch. Die Schwenkachse s liegt parallel zur z-Richtung.

Wird auf den Betätigungsbereich 32 eine Druckkraft in Richtung auf die Basis 2 ausgeübt, wird der betätigungsseitige Hebelarm in Richtung auf die Basis 2 geschwenkt, der mittlere Bereich 33 des Betätigungsteils 3 mit dem Stiftaufnahmebereich 38 um den Stift 8 herum geschwenkt, und der zweite Hebelarm, der den umgreifenden Bereich 35 bildet, von der Basis 2 weg geschwenkt.

Aufgrund der parallelen Lage der z-Richtung und der Schwenkachse s läßt sich die Schwenkbewegung des umgreifenden Teils 35 des Betätigungsteils 3 um die Schwenkachse s bezüglich der z-Achse in eine Schwenkkomponente in Umfangsrichtung ϕ um die Rinnenachse (z-Achse) und eine Bewegungskomponente orthogonal zu der Hauptebene der Basis 2 aufteilen. Da sich der Spalt 6 bezüglich der z-Achse in radialer Richtung nach außen erstreckt, und zwar in einem Winkel von etwa 45° bezüglich der Hauptebene der Basis 2, sorgen diese beiden Bewegungskomponenten dafür, daß sich der Spalt 6 vergrößert. Insbesondere sorgt die Schwenkkomponente bezüglich der z-Achse dafür, daß sich der Spalt 6 in Umfangsrichtung ϕ weitet. Durch den aufgeweiteten Spalt 6 kann ein verdickter Randbereich einer Plane ohne weiteren Aufwand quer zur Rinne 5 in diese eingebracht werden. Sobald der verdickte Randbereich vollkommen in der Rinne 5 einliegt, wird die Schwenkbewegung umgekehrt, und das Betätigungsteil 3 kehrt in die in Fig. 1 gezeigte Sicherungsstellung zurück.

Der Stiftbolzen 8 dient weiter dazu, das Betätigungsteil 3 an der Basis 2 gegen einen Abzug von dem Vorsprungsbereich 4 zu arretieren. Grundsätzlich wäre es denkbar, daß der mittlere Bereich 33 des Betätigungsteils 3 den Stift 8 vollkommen umschließt und etwa reibschlüssig mit ihm verbunden ist. Bei der in den Figuren gezeigten ersten und zweiten Ausführungsform ist der mittlere Bereich 33 des Betätigungsteils 3 dagegen im wesentlichen formschlüssig zwischen dem Stiftbolzen 8 und einem Kontaktbereich 23 der Basis 2, die dem Stiftbolzen 8 gegenüberliegt, gehalten.

Der Kontaktbereich 23 der Basis 2 bildet dabei eine Stützfläche bei der Schwenkbewegung um den Stiftbolzen 8 bzw. die Schwenkachse s. Während der Schwenkbewegung bleibt der Abstand zwischen der Schwenkachse s und dem Kontaktbereich 23 nicht konstant. Vielmehr werden diese Bereiche durch das im wesentlichen formschlüssige Anliegen des mittleren Bereichs 33 etwas auseinandergespreizt. Insbesondere kann dazu vorgesehen sein, daß das Betätigungsteil 3 aus einem härteren Material gefertigt ist als die Basis 2. So kann beispielsweise das Betätigungsteil aus einem harten Plastik gefertigt sein, während die Basis 2 aus einem weicheren Plastik gebildet ist. Auch könnte das Betätigungsteil 3, wie auch der Stift 8, z.B. aus Metall gefertigt sein.

Aus Fig. 1 sind noch Strukturmerkmale der Basis 2 zu erkennen, die eine Befestigung der Basis 2 an beispielsweise einem Wohnmobil oder Wohnwagen ermöglichen. Zum einen könnte die Basis 2 durch Befestigungslöcher 26 mit dem Wohnwagen verschraubt werden. Alternativ und/oder zusätzlich wird die Basis 2 aber über ein an dem umlaufenden Flanschbereich 29 an der Bodenseite 27 der Basis befestigtes Elastomerschutzkissen bereits durch den Druck bzw. das Gewicht der Plane und des Zeltgestänges an dem Wohnwagen gehalten, so daß eine weitere Sicherung der Basis an dem Wohnwagen üblicherweise nicht nötig ist.

Des weiteren ist in Fig. 1 noch eine weitere Durchgangsöffnung 43 durch das Vorsprungsteil 4 an dessen entferntem Ende 42 zu erkennen. Diese Öffnung 43 dient der Anbringung bzw. Ankopplung des Zeltgestänges.

In den Figuren 2a bis 2d ist die Basis für sich allein in einer Draufsicht, einer Seitenansicht, einer Schnittansicht sowie einer perspektivischen Ansicht dargestellt. Aus Fig. 2a sind die zwei Befestigungslöcher 26 gut zu erkennen. Diese bleiben frei zugänglich, selbst wenn das Betätigungsteil 3 angebracht ist, da das Betätigungsteil 3 in seinem mittleren Bereich 33 bezüglich der z-Richtung Einbuchtungen 36 aufweist (siehe Fig. 3a). Des weiteren ist die Durchgangsöffnung 24 erkennbar, durch die das Vorsprungsteil 4 durch die Basis 2 hindurchgesteckt wird. Dabei ist das Vorsprungsteil 4 durch Flansche 45 am nahen Ende 44 (siehe Fig. 4c), die in Ausnehmungen 25 an der Bodenseite der Basis 2 aufgenommen sind, gegen ein weiteres Herausziehen des Vorsprungsteils 4 aus der Basis 2 gesichert. Weiter sind in den Figuren 2a bis 2c Zähne 51 erkennbar, die in dem basisseitigen Bereich der Rinne 5 gebildet sind. Diese Zähne 51 greifen bei eingebrachtem verdickten Randbereich der Plane in diesen Randbereich ein und sorgen für einen verbesserten Halt der Plane gegen ein seitliches Verrutschen.

Aus den Figuren 2a und 2b ist noch der plattenartige Aufbau der Basis 2 zu erkennen, wobei ein unterer Plattenbereich 27 derart einen oberen Plattenbereich 28 umfänglich überragt, daß ein umlaufender Flanschbereich 29 gebildet ist. Dieser kann, wie erwähnt, in ein Elastomerschutzkissen eingepaßt werden.

Des weiteren ist aus den Figuren 2b und 2c zu erkennen, daß der die Rinne 5 zum Teil umgreifende Abschnitt des oberen Bereichs 28 der Basis 2 am äußersten Ende eine schräge Fläche 21 aufweist, die zusammen mit einer schrägen Fläche 31 (siehe Fig. 3b) des Betätigungsteils 3 den Spalt 6 definiert.

Die Figuren 3a, 3b, 3c und 3d zeigen das Betätigungsteil 3 in einer Draufsicht von der der Basis 2 zugewandten Seite, einer Seitenansicht, einer Schnittansicht und einer perspektivischen Ansicht. Gut aus Fig. 3a zu erkennen ist die stempelartige Grundform des Betätigungsteils 3, die dadurch zustande kommt, daß im mittleren Bereich 33 Einbuchtungen 36 gebildet sind. Neben der Freilegung der Befestigungslöcher 26 der Basis 2 sorgen die Einbuchtungen 36 für eine klar definierte tastenartige Form des Betätigungsbereichs 32, der somit auch im Dunkeln oder außerhalb des zugänglichen Blickfelds leicht zu ertasten und zu betätigen ist. Des weiteren ist zu erkennen, daß an der Unterseite des Betätigungsbereichs 32 eine ringförmige Ausnehmung 37 gebildet ist, die der Aufnahme einer Sprungfeder dient, welche als zusätzliche Spanneinrichtung vorgesehen sein kann. Wird nämlich eine Feder in die Ausnehmung 37 eingesetzt, die etwa im ungespannten Zustand bei montiertem Betätigungsteil 3 bis zur entsprechend gegenüberliegenden Fläche der Basis 2 reicht, wird diese durch Betätigung des Betätigungsteils 4 vorgespannt. Dies hat zur Folge, daß das Betätigungsteil 4 nach Betätigung automatisch in die Sicherungsstellung zurückkehrt, wenn der Betätigungsdruck nachläßt, sofern die Federkraft ausreichend ist, den beim Verschwenken auftretenden Reibungswiderstand zu überwinden.

Auf dem dem Betätigungsbereich 33 entgegengesetzten Sicherungsbereich 35 des Betätigungsteils 3 sind ebenfalls Zähne 51 gebildet, die wie die Zähne 51 an der Basis 2 für einen Eingriff zwischen der Rinne 5 und dem verdickten Randbereich der Plane sorgen, um einem seitlichen Verrutschen entgegenzuwirken. Im mittleren Bereich 33 ist der an dem Stiftbolzen 8 anliegende Bereich 38 kreisförmig ausgebildet. Dieser Bereich 38 dreht sich beim Verschwenken des Betätigungsteils 3 um den Stiftbolzen 8.

In den Figuren 4a bis 4c ist das als Vorsprungsbereich dienende Vorsprungsteil 4 in einer perspektivischen Ansicht, einer Seitenansicht bzw. einer Frontansicht abgebildet. Die Öffnung 48 für den Stiftbolzen 8, die Öffnung 43 für das Zeltgestänge sowie die Flanschbereiche 45 wurden bereits oben erläutert.

In den Figuren 5a bis 5c ist eine zweite Ausführungsform der Erfindung abgebildet. Diese zweite Ausführungsform unterscheidet sich von der ersten Ausführungsform lediglich darin, daß keine Zähne 51 in der Rinne 5 vorgesehen sind. Allerdings sind die Darstellungen der Figuren 5a bis 5c gegenüber denen der Figuren 1 bis 4 unterschiedlich, so daß einige Merkmale der erfindungsgemäßen Halteeinrichtung 1 besser zum Tragen kommen. Insbesondere kommt die Form des Spalts 6 zwischen den Randflächen 21 der Basis 2 und 31 des Betätigungsteils 3 sowie die Spaltbreite 7 in der Sicherungsstellung besser zum Ausdruck, wie auch die Neigung der Spaltöffnung 6 gegenüber der Hauptebene der Basis, die etwa 45° beträgt.

In den Figuren 6a bis 6e ist eine dritte Ausführungsform der Erfindung dargestellt. Diese unterscheidet sich von den ersten beiden Ausführungsformen in einigen unterschiedlichen Gestaltungselementen. So weist die dritte Ausführungsform die üblicherweise nicht nötigen Befestigungslöcher 26 nicht auf. Dennoch sind die Einbuchtungen 36 vorgesehen, um die tastenartige Struktur des Betätigungsbereichs 32 zu erhalten.

Das entfernte Vorsprungsende 42 des Vorsprungsbereichs 4 ist nicht wie in der ersten Ausführungsform als Ganzes abgerundet gebildet, sondern weist lediglich abgerundete Kantenbereiche auf. Des weiteren sind die in der Aufnahmerinne 5 angeordneten Zähne 51 in Aufnahmerichtung z versetzt angeordnet, wodurch für das Einzwängen gegen das seitliche Verrutschen bei gleicher Haltekraft eine niedrigere Einpreßkraft erforderlich ist.

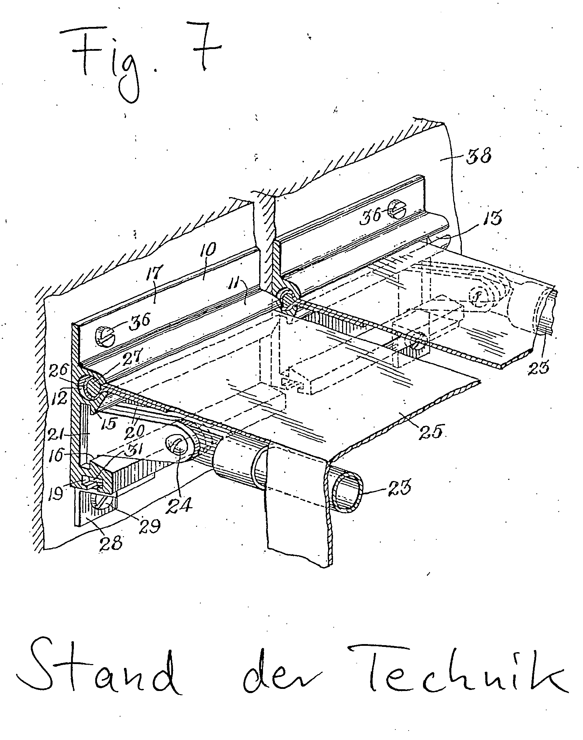

Die Figur 7 ist die der US 2,787,321 entnommene Figur 1, die ein herkömmliches Haltesystem für Planen zeigt und im einleitenden Teil der Beschreibung erläutert wurde.

Die in den Figuren gezeigten Ausführungsbeispiele dienen der Erläuterung und stellen keine Einschränkung der Erfindung dar. Vielmehr können die in der obigen Beschreibung sowie in den Ansprüchen offenbarten Merkmale der Erfindung sowohl einzeln als auch in beliebiger Kombination für die Verwirklichung der Erfindung in ihren verschiedenen Ausführungsformen wesentlich sein.

## Patentansprüche

1. Halteeinrichtung (1) zum Halten eines flächigen Gegenstands, insbesondere einer Plane,
mit einem ersten (2) und einem zweiten (3) Haltebereich, die in einer Sicherungsstellung zur Sicherung des flächigen Gegenstands einen Spalt (6) einer ersten Breitenabmessung (7) begrenzen,
**dadurch gekennzeichnet, daß**
die Haltebereiche (2, 3) in eine Freigabestellung zur Montage/Demontage des flächigen Gegenstands verstellt werden können, in der der Spalt (6) eine zweite Breitenabmessung hat, die größer als die erste Breitenabmessung (7) ist.

2. Halteeinrichtung nach Anspruch 1, **dadurch gekennzeichnet, daß** sie weiter zum Halten eines flächigen Gegenstands mit verdicktem Randbereich, insbesondere einer Plane, an einer Struktur ausgelegt ist, insbesondere an einem Wohnwagen oder ähnlichem, und daß der der erste Haltebereich (2) ein Basisbereich ist, an dem eine entlang einer Aufnahmerichtung (z) verlaufende Aufnahmerinne (5) vorgesehen ist, die der Aufnahme des verdickten Randbereichs dient, der zweite Haltebereich (3) ein die Aufnahmerinne (5) in einer Umfangsrichtung (ϕ) zum Teil umschließender Sicherungsbereich ist, der einer im wesentlichen formschlüssigen Sicherung des verdickten Randbereichs in der Aufnahmerinne (5) dient, der Spalt (6) als eine quer zur Aufnahmerichtung (z) liegende Durchgangsöffnung zum Durchtritt eines nicht verdickten Abschnitts des flächigen Gegenstands von der Aufnahmerinne nach außen ausgebildet ist, und das Verstellen derart ist, daß der Sicherungsbereich (3) relativ zu dem Basisbereich (2) bewegt wird, wobei die Abmessung (7) der Durchgangsöffnung (6) im wesentlichen eine Abmessung in Umfangsrichtung (ϕ) ist.

3. Halteeinrichtung nach Anspruch 1 oder 2, **dadurch gekennzeichnet, daß** die Verstellbewegung des Sicherungsbereichs (3) eine Schwenkbewegung ist.

4. Halteeinrichtung nach Anspruch 3, **dadurch gekennzeichnet, daß** die Aufnahmerinne (5) gerade verläuft und die Schwenkachse (s) parallel zur Aufnahmerichtung (z) liegt.

5. Halteeinrichtung nach einem der Ansprüche 2 bis 4, **dadurch gekennzeichnet, daß** der Basisbereich (2) von einer plattenartigen Basis gebildet ist, deren Hauptebene insbesondere parallel zur Aufnahmerichtung (z) liegt, und der Sicherungsbereich (3) durch ein separates Betätigungsteil gebildet ist.

6. Halteeinrichtung nach Anspruch 5, **gekennzeichnet durch** eine Arretiereinrichtung zum Halten des Betätigungsteils (3) an der Basis (2).

7. Halteeinrichtung nach einem der Ansprüche 5 oder 6, **dadurch gekennzeichnet, daß** die Basis (2) beabstandet von der Aufnahmerinne (5) einen quer aus der Hauptebene ragenden Vorsprungsbereich (4) aufweist, und die Schwenkachse (s) im Bereich des Vorsprungsbereichs (4) angeordnet ist.

8. Halteeinrichtung nach Anspruch 7, **dadurch gekennzeichnet, daß** der Vorsprungsbereich (4) durch ein separates Teil gebildet ist.

9. Halteeinrichtung nach einem der Ansprüche 7 oder 8, **dadurch gekennzeichnet, daß** das Betätigungsteil (3) ein am Vorsprungsbereich (4) gelagerter wippenartiger Hebel ist.

10. Halteeinrichtung nach einem der Ansprüche 7 bis 9, **dadurch gekennzeichnet, daß** der Vorsprungsbereich (4) das Betätigungsteil (3) durchdringt, und die Schwenkachse (s) auf der der Basis (2) abgewandten Seite des Betätigungsteils (3) angeordnet ist.

11. Halteeinrichtung nach einem der Ansprüche 7 bis 10, **gekennzeichnet durch** einen in den Vorsprungsbereich (4) gesteckten Stift (8), der die Schwenkachse (s) definiert.

12. Halteeinrichtung nach Anspruch 11, **dadurch gekennzeichnet, daß** der Stift (8) die Arretiereinrichtung bildet.

13. Halteeinrichtung nach einem der Ansprüche 10 bis 12, **dadurch gekennzeichnet, daß** ein bezüglich einer quer zur Aufnahmerichtung (z) verlaufenden Achse mittlerer Bereich (33) des Betätigungsteils (3) im wesentlichen formschlüssig zwischen den Stift (8) und einen dem Stift (8) gegenüberliegenden Abschnitt (23) der Basis (2) eingepaßt ist.

14. Halteeinrichtung nach einem der Ansprüche 5 bis 13, **dadurch gekennzeichnet, daß** das Betätigungsteil (3) und/oder der Stift (8) eine höhere Festigkeit und/oder Biegesteifigkeit aufweisen/aufweist als die Basis (2).

15. Halteeinrichtung nach einem der Ansprüche 2 bis 14, **dadurch gekennzeichnet, daß** der Basisbereich/die Basis (2) Befestigungslöcher (26) für eine Befestigung der Halteeinrichtung (1) an der Struktur aufweist.

16. Halteeinrichtung nach einem der Ansprüche 7 bis 15, **dadurch gekennzeichnet, daß** der Vorsprungsbereich (4) an seinem entfernten Ende (42) ein Loch (43) aufweist.

17. Halteeinrichtung nach einem der Ansprüche 5 bis 16, **dadurch gekennzeichnet, daß** das Betätigungsteil (3) in Draufsicht auf die Hauptebene der Basis (2) eine im wesentlichen stempelförmige Grundform aufweist, wobei im mittleren Bereich (33) Einbuchtungen (36) vorgesehen sind, die insbesondere die Befestigungslöcher (26) der Basis (2) freilegen.

18. Halteeinrichtung nach einem der Ansprüche 1 bis 17, **gekennzeichnet durch** eine Spanneinrichtung zum elastischen Spannen der Haltebereiche (2, 3), insbesondere des Sicherungsbereichs/Betätigungsteils (3) in die Sicherungsstellung, insbesondere in Form einer Sprungfeder.

19. Halteeinrichtung nach einem der Ansprüche 2 bis 18, **dadurch gekennzeichnet, daß** die Aufnahmerinne (5) einen kreisförmigen Querschnitt aufweist.

20. Halteeinrichtung nach einem der Ansprüche 2 bis 19, **dadurch gekennzeichnet, daß** die Durchtrittsöffnung (6) in der Sicherungsstellung durch einen anliegenden, ungebundenen Kontakt zwischen sicherungsseitigen Endflächen (21; 31) der Basis (2) und des Betätigungsteils (3) gebildet ist, oder durch einen Spalt zwischen diesen Flächen.

21. Halteeinrichtung nach einem der Ansprüche 5 bis 20, **dadurch gekennzeichnet, daß** die Durchtrittsöffnung (6) radial in einer Richtung verläuft, die mit der Hauptebene der Basis (2) einen Winkel im Bereich von 10° bis 80°, bevorzugt 30° bis 60°, insbesondere 40° bis 50° einschließt.

22. Halteeinrichtung nach einem der Ansprüche 2 bis 21, **dadurch gekennzeichnet, daß** der Basisbereich/die Basis (2) an der dem Sicherungsbereich (3) abgewandten Seite einen Flanschbereich (29) aufweist.

23. Halteeinrichtung nach einem der Ansprüche 2 bis 22, **dadurch gekennzeichnet, daß** in der Aufnahmerinne (5) Zähne (51) angeordnet sind.

24. Haltesystem bestehend aus einer oder einer Mehrzahl von Halteeinrichtungen (1) nach einem der vorhergehenden Ansprüche.

25. Verfahren zum Sichern eines flächigen Gegenstands, insbesondere einer Plane, an einem Wohnwagen oder einer ähnlichen Struktur, bei dem der flächige Gegenstand mit einem verdickten Endbereich in eine durch ein Haltesystem des Wohnwagens oder der ähnlichen Struktur, insbesondere ein Haltesystem nach Anspruch 24, definierte Sicherungsbahn im wesentlichen formschlüssig eingebracht wird, wobei der eingebrachte flächige Gegenstand aus einer quer zur Sicherungsbahn verlaufenden Durchtrittsöffnung der Sicherungsbahn nach außen austritt,
**dadurch gekennzeichnet, daß** das Einbringen des flächigen Gegenstands durch die Durchtrittsöffnung quer zur Sicherungsbahn erfolgt, wobei die Durchtrittsöffnung zum Einbringen aufgeweitet und anschließend wieder verengt wird.

26. Verfahren nach Anspruch 25, **dadurch gekennzeichnet, daß** das Aufweiten und Verengen der Durchtrittsöffnung durch ein Verschwenken eines die Sicherungsbahn zumindest teilweise definierenden Sicherungsbereichs einer Halteeinrichtung, insbesondere einer Halteeinrichtung nach einem der Ansprüche 1 bis 23, des Haltesystems erfolgt.

27. Verwendung einer Halteeinrichtung, aufweisend
ein erstes und ein zweites Halteteil, die in einer Sicherungsstellung einen Spalt einer ersten Breitenabmessung begrenzen, und in eine Freigabestellung verstellt werden können, in der der Spalt eine zweite Breitenabmessung hat, die größer als die erste Breitenabmessung ist, zum Sichern eines flächigen Gegenstands, insbesondere einer Plane, an einem Wohnwagen oder einer ähnlichen Struktur.
